# EUROPEAN PATENT APPLICATION

(11) **EP 2 429 174 A2**
(43) Date of publication of application: **14.03.2012**
(21) Application number: 11178409.6
(22) Date of filing: 23.08.2011
(51) Int. Cl.: H04N 5/00, H04N 7/24, H04L 29/06

(54) **Reproduction device, reproduction method, and program**

(30) Priority: 09.09.2010 JP 2010202196
(71) Applicant: Sony Corporation, Tokyo 108-0075 (JP)
(72) Inventor: Okano, Mitsuhiro, Tokyo (JP); Hashiguchi, Hiroaki, Tokyo (JP); Tano, Hiroaki, Tokyo (JP)
(74) Representative: Beder, Jens

(57) **Abstract**

A reproduction device includes a reception unit that receives content data through a network in a streaming manner; a discrimination unit that discriminates reproduction data to reproduce and non-reproduction data not to reproduce in the content data received in the streaming manner by the reception unit; a data managing unit that stores the reproduction data in a buffer and does not store the non-reproduction data in the buffer, with respect to the reproduction data and the non-reproduction data discriminated by the discrimination unit; and a decoding unit that decodes the reproduction data stored in the buffer by the data managing unit.

## Description

### BACKGROUND

The present disclosure relates to a reproduction device, a reproduction method, and a program.

In the related art, a reproduction device that reproduces contents such as sounds and videos is known. The reproduction device receives a content file from a server or the like through a network, and reproduces the content file.

However, when the volume of the content file is large, time to completion of reception of the file is long. Accordingly, the start of reproduction is delayed. To solve such a problem, so-called streaming reproduction is performed. In the streaming reproduction, data included in the content file is subjected to buffering in a buffer of the reproduction device, and then reproduction is performed (see Japanese Unexamined Patent Application Publication No. 2010-87546).

### SUMMARY

In a reproduction device having an abundant resource, it is possible to take a buffer to the maximum. However, in a reproduction device having a poor resource, a size of a buffer is small. For this reason, when the size of the buffer is small, it is difficult to perform stable streaming reproduction, and there may be a content which is not reproduced at all.

It is desirable to provide a new and improved reproduction device, a reproduction method, and a program, in which stable streaming reproduction can be performed even when a volume of a buffer is small.

According to an embodiment of the present disclosure, there is provided a reproduction device including a reception unit that receives content data through a network in a streaming manner; a discrimination unit that discriminates reproduction data to reproduce and non-reproduction data not to reproduce in the content data received in the streaming manner by the reception unit; a data managing unit that stores the reproduction data in a buffer and does not store the non-reproduction data in the buffer, with respect to the reproduction data and the non-reproduction data discriminated by the discrimination unit; and a decoding unit that decodes the reproduction data stored in the buffer by the data managing unit.

In the reproduction device, the data managing unit may manage a first address of the reproduction data in the content data and a second address of the reproduction data stored in the buffer to be associated, and the decoding unit may access the first address managed by the data managing unit and decode the reproduction data.

The reproduction device may further include an analysis unit that analyzes the non-reproduction data discriminated by the discrimination unit, and the analysis unit may analyze the non-reproduction data during the decoding of the reproduction data performed by the decoding unit.

In the reproduction device, the non-reproduction data may include attribute information of the reproduction data, and the analysis unit may analyze the non-reproduction data and extracts the attribute information.

In the reproduction device, the content data may include audio data and video data mixed therein, and the data managing unit may store data obtained by picking out the video data from the content data, as the reproduction data in the buffer.

In the reproduction device, the data managing unit may store the audio data, and reference data included in the content data and referred to at the time of decoding the audio data, as the reproduction data in the buffer, and the decoding unit may decode the audio data on the basis of the reference data stored in the buffer.

According to another embodiment of the present disclosure, there is provided a reproduction method including receiving content data through a network in a streaming manner; discriminating reproduction data to reproduce and non-reproduction data not to reproduce in the content data received in the streaming manner; storing the reproduction data in a buffer and not storing the non-reproduction data in the buffer, with respect to the reproduction data and the non-reproduction data which are discriminated; and decoding the reproduction data stored in the buffer.

According to still another embodiment of the present disclosure, there is provided a program for causing a computer of a reproduction device to execute receiving content data through a network in a streaming manner; discriminating reproduction data to reproduce and non-reproduction data not to reproduce in the content data received in the streaming manner; storing the reproduction data in a buffer and not storing the non-reproduction data in the buffer, with respect to the reproduction data and the non-reproduction data which are discriminated; and decoding the reproduction data stored in the buffer.

As described above, according to the embodiment of the present disclosure, it is possible to provide a new and improved reproduction device, a reproduction method, and a program, in which stable streaming reproduction can be performed even when a volume of a buffer is small.

### BRIEF DESCRIPTION OF THE DRAWINGS

Fig. 1 is a block diagram illustrating a configuration of a streaming reproduction system.
Fig. 2 is a diagram illustrating functional blocks of a sound reproduction control unit.
Fig. 3 is a schematic diagram illustrating a data structure of an MP3 format audio file.
Fig. 4 is a schematic diagram illustrating a data structure of an MP4 format movie file.
Fig. 5 is a flowchart illustrating a sound reproducing process of an MP3 format audio file.
Fig. 6 is a flowchart illustrating an analysis process of an ID3 tag.
Fig. 7 is a flowchart illustrating a sound reproducing process of an MP4 format movie file.

### DETAILED DESCRIPTION OF EMBODIMENTS

Hereinafter, preferred embodiments of the present disclosure will be described in detail with reference to the accompanying drawings. In the specification and the drawings, the same reference numerals and signs are given to constituent elements having substantially the same functional configurations, and the repeated description is omitted.

The description is performed in the following order.
1. Configuration of Streaming Reproduction System
2. Configuration of Sound Reproduction Control Unit
3. Sound Reproducing Process
3-1. Sound Reproducing Process of MP3 Format Audio File
3-2. Sound Reproducing Process of MP4 Format Movie File
4. Effectiveness of Reproduction Device according to Embodiment
5. Other Embodiments

### <1. Configuration of Streaming Reproduction System>

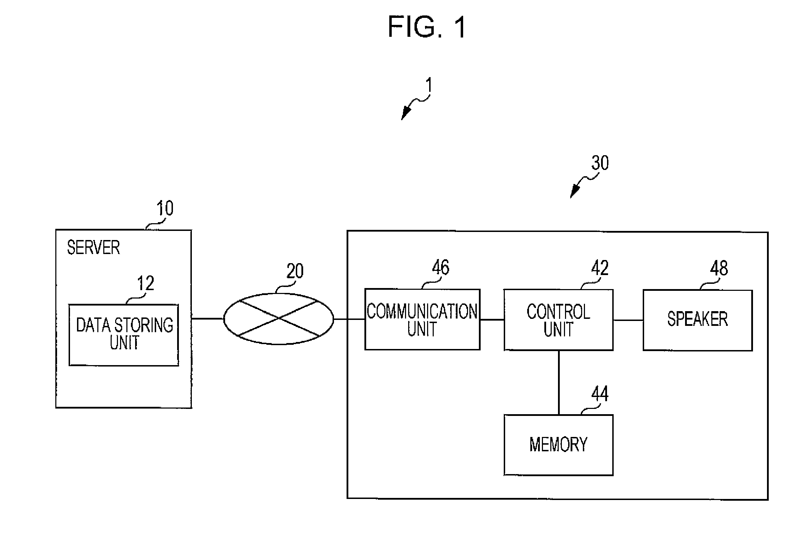

First, a configuration of a streaming reproduction system 1 according to an embodiment will be described with reference to Fig. 1. Fig. 1 is a block diagram illustrating the configuration of the streaming reproduction system 1.

The streaming reproduction system 1 is a system for transmitting and reproducing a content file in a streaming manner. The streaming reproduction system 1 includes a server 10, a network 20, and a reproduction device 30. In Fig. 1, the network 20 is a wireless network by way of example, but it is not limited thereto, and may be a wire network.

The server 10 provides a content file (content data) including video data or audio data. The server 10 has a data storing unit 12 that stores a content file including encoded data. The data storing unit 12 stores an MP3 format audio file, an MP4 format movie file, and the like, as the content file. The server 10 transmits the content file stored in the data storing unit 12 in the streaming manner by a TCP (Transmission Control Protocol) packet and the like.

The reproduction device 30 receives the content file from the server 10 through the network 20 in the streaming manner to decode and reproduce the received content file. In the embodiment, a mini-component having an internet radio function of outputting sound from a speaker will be described as an example of the reproduction device 30.

As shown in Fig. 1, the reproduction device 30 includes a control unit 42, a memory 44, a communication unit 46 as an example of the reception unit, and a speaker 48.

The control unit 42 controls the whole of the reproduction device 30, and performs a predetermined control on the communication unit 46, the speaker 48, and the like. The control unit 42 also serves as a sound reproduction control unit 100 to be described later.

The memory 44 stores various kinds of data, for example, information (e.g., information of programs executed by the control unit 12) used in the control unit 42.

The communication unit 46 has an antenna, and performs radio communication with the network 20 through a base station connected to the external server 10. For example, the communication unit 46 receives the content file from the server 10 through the network 20 in the streaming manner.

The speaker 48 outputs sound. For example, the speaker 48 outputs (reproduces) sound corresponding to the audio data included in the content file received from the server 10 in the streaming manner.

The reproduction device 30 of the embodiment serves as an internet radio. When a movie file is received in the streaming manner, the audio data included in the movie file is reproduced but the video data is not reproduced.

### <2. Configuration of Sound Reproduction Control unit>

As described above, the reproduction device 30 reproduces the sound corresponding to the audio data of the content file received in the streaming manner. To perform this function, the reproduction device 30 has the sound reproduction control unit 100.

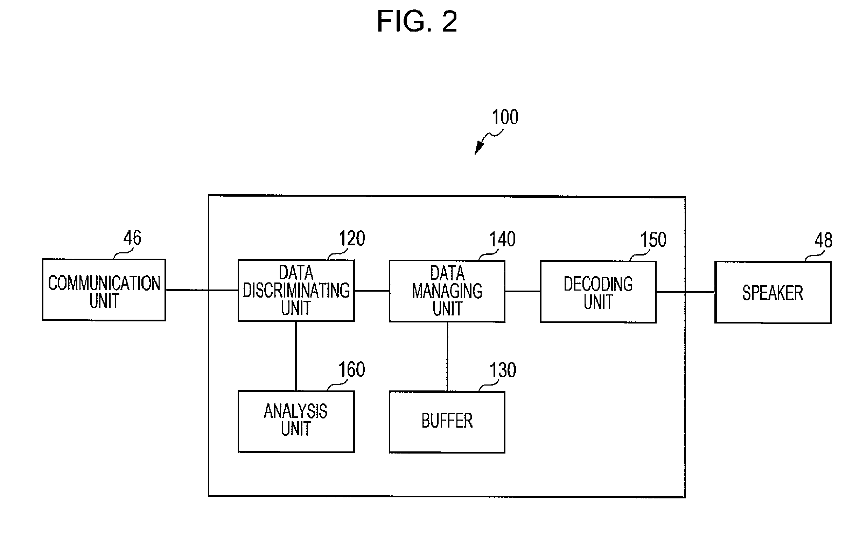

A configuration of the sound reproduction control unit 100 will be described with reference to Fig. 2. Fig. 2 is a diagram illustrating functional blocks of the sound reproduction control unit 100. The sound reproduction control unit 100 includes a data discriminating unit 120, a buffer 130, a data managing unit 140, a decoding unit 150, and an analysis unit 160.

The data discriminating unit 120 discriminates the kind of the content file received in the streaming manner by the communication unit 46. Specifically, the data discriminating unit 120 discriminates the kind of the content file received in the streaming manner with reference to extension or the like of the file. For example, the data discriminating unit 120 discriminates whether the content file received in the steaming manner is an MP3 format audio file or an MP4 format movie file.

The data discriminating unit 120 discriminates reproduction data to reproduce and non-reproduction data not to reproduce, in the content file received in the streaming manner by the communication unit 46. In the embodiment, the reproduction data and the non-reproduction data are predetermined for each content file. Accordingly, if the content file can be discriminated, the data discriminating unit 120 can easily identify the reproduction data and the non-reproduction data.

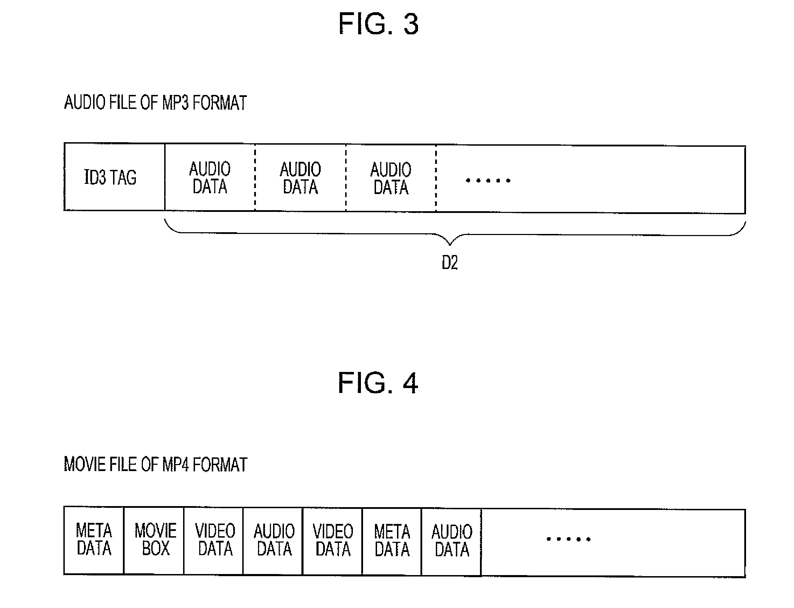

As for the reproduction data and the non-reproduction data described above, the MP3 format audio file shown in Fig. 3 and the MP4 format movie file shown in Fig. 4 are exemplified for description.

Fig. 3 is a schematic diagram illustrating a data structure of the MP3 format audio file. As shown in Fig. 3, the audio file includes an ID3 tag provided at the head, and audio data (data group D2) subsequent therefrom. The ID3 tag is data including attribute information (e.g., information representing an artist name, a production year, a music title, etc.) of the audio data, and is not reproduced data. For this reason, in the case of the audio file according to the embodiment, the audio data corresponds to the reproduction data, and the ID3 tag corresponds to the non-reproduction data.

Fig. 4 is a schematic diagram illustrating a data structure of the MP4 format movie file. As shown in Fig. 4, the movie file includes audio data, video data, Movie Box, meta data, and the like. The file includes the audio data and the video data mixed therein. The meta data includes attribute information about the movie. The Movie Box is reference data referred to at the time of reproducing (decoding) the audio data or the video data, and there is only one in the movie file. In the case of the movie file according to the embodiment, the audio data and the Movie Box correspond to the reproduction data, and the video data and the meta data correspond to the non-reproduction data.

The buffer 130 buffers the reproduction data out of the reproduction data and the non-reproduction data included in the content file received in the streaming manner. That is, in the case of the audio file shown in Fig. 3, the buffer 130 buffers only the audio data. In the case of the movie file shown in Fig. 4, the buffer 130 buffers only the audio data and the Movie Box. That is, the reproduction data buffered in the case of the movie file is data obtained by picking out the video data and the meta data from the movie data. As described above, only the minimum data used for reproduction is buffered in the buffer 130, and thus it is possible to buffer the data even when the volume of the buffer 130 is small.

On the other hand, the non-reproduction data of the content file is transmitted to the analysis unit 160. That is, the ID3 tag of the audio file, or the video data and the meta data of the movie file are transmitted to the analysis unit 160.

The data managing unit 140 manages the buffer 130 to perform the buffering of the content file received in the streaming manner. In the embodiment, the whole of the content file is not buffered in the buffer 130, but the data managing unit 140 manages the buffer 130 to perform the buffering of only the reproduction data out of the reproduction data and the non-reproduction data discriminated by the data discriminating unit 120.

Since the non-reproduction data of the content file is not buffered in the buffer 130, the address of the audio data buffered in the buffer 130 is shifted. For this reason, the data managing unit 140 manages the address (first address) of the audio data in the content file, and the address (second address) at the time of buffering in the buffer 130 to be associated.

The decoding unit 150 decodes the audio data buffered in the buffer 130 when a regular amount of data is buffered in the buffer 130. Specifically, when the decoding unit 150 accesses the audio data of the first address in the data managing unit 140, the data managing unit 140 transmits the audio data positioned at the second address of the buffer 130 corresponding to the first address to the decoding unit 150. Then, the audio data (the same data as the audio data of the first address) of the second address is decoded by the decoding unit 150. In addition, when the content file is the movie file, the decoding unit 150 decodes the audio data on the basis of the Movie Box stored in the buffer 130.

The audio data decoded by the decoding unit 150 is transmitted to the speaker 48, and is auditorily reproduced by the speaker 48.

The analysis unit 160 analyzes the non-reproduction data discriminated by the data discriminating unit 120 during the decoding of the audio data by the decoding unit 150. For example, in the case of the audio file, the analysis unit 160 analyzes the ID3 tag transmitted from the data discriminating unit 120, and extracts the attribute information of the audio file. In the case of the movie film, the analysis unit 160 analyzes the meta data or the video data, and extracts the attribute information about the movie file.

By providing the analysis unit 160, it is possible to acquire attribute information about the content file even when the meta data about the content file is not received from the server 10. For this reason, the reproduction device 30 according to the embodiment does not receive the meta data of the content file received from the server 10 in the streaming manner.

The information extracted by the analysis unit 160 may be displayed on a display unit (not shown) during the sound reproduction of the speaker 48. Accordingly, a user can recognize the information about the reproduced sound.

### <3. Sound Reproducing Process>

The sound reproducing process performed by the sound reproduction control unit 100 described above will be described in detail. Hereinafter, the description is divided into a sound reproducing process of the MP3 format audio file and a sound reproducing process of the MP4 format movie file.

### (3-1. Sound Reproducing Process of MP3 Format Audio File)

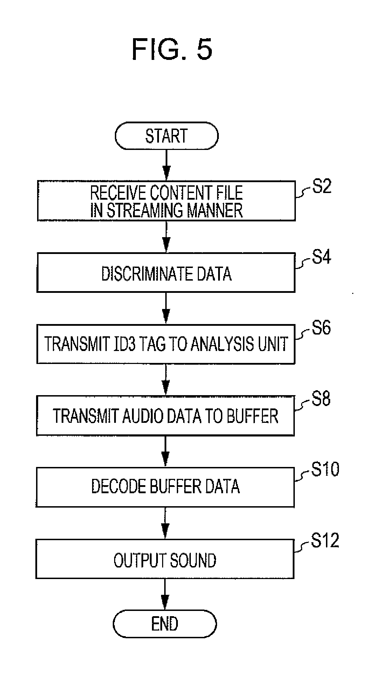

Fig. 5 is a flowchart illustrating the sound reproducing process of the MP3 format audio file. The control unit 42 performs a predetermined program stored in the memory unit 44, to realize the sound reproducing process.

The sound reproducing process shown in Fig. 5 is started, when the server 10 receives a notice of a transmission request of the content file to the reproduction device 30 and transmits the content file (MP3 format audio file) to the reproduction device 30.

First, the communication unit 46 of the reproduction device 30 receives the content file transmitted from the server 10 through the network 20 in the streaming manner (Step S2). That is, the communication unit 46 receives the content file in the TCP packet.

Then, the data discriminating unit 120 discriminates the content file received in the streaming manner by the communication unit 46 (Step S4). In the embodiment, the data discriminating unit 120 discriminates that the received file is an audio file. The data discriminating unit 120 discriminates the audio data that is the reproduction data and the ID3 tag that is the non-reproduction data in the audio file.

After the discrimination, the data discriminating unit 120 transmits the ID3 tag to the analysis unit 160 (Step S6). On the other hand, the data discriminating unit 120 transmits the audio data to the buffer 130 through the data managing unit 140 (Step S8). That is, only the reproduced audio data is buffered in the buffer 130. In addition, the order of the processes of Step S6 and Step S8 may be changed.

The data managing unit 140 manages the address of the audio data when the audio data is buffered in the buffer 130. The reason is because the ID3 tag positioned at the head of the content file is not stored in the buffer 130, the address of the audio data is shifted, and it is necessary to manage the address of the audio data in the buffer 130.

When a predetermined amount of audio data is buffered in the buffer 130, the decoding unit 150 accesses the data managing unit 140 and decodes the audio data (Step S10). Specifically, the decoding unit 150 accesses the first address managed by the data managing unit 140, and the audio data buffered in the buffer 130 at the second address corresponding to the first address is transmitted to the decoding unit 150 and is decoded. Thereafter, the decoded audio data is reproduced as sound by the speaker 48 (Step S12).

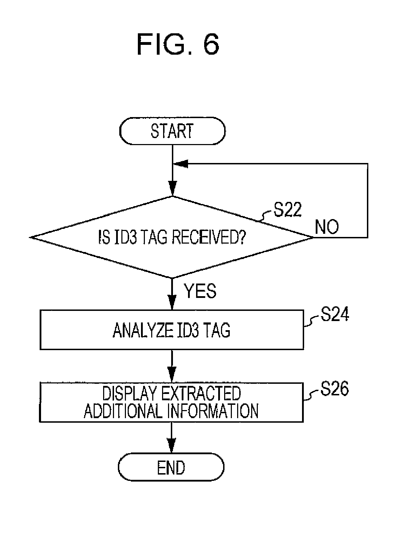

During the decoding of the audio data, the analysis process of the ID3 tag is performed by the analysis unit 160 shown in Fig. 6. The analysis result is displayed, for example, on the display unit during the sound reproduction of the speaker 48.

Fig. 6 is a flowchart illustrating the analysis process of the ID3 tag. In the analysis process, when the analysis unit 160 receives the ID3 tag (Step S22: Yes), the analysis unit 160 performs the analysis of the ID3 tag (Step S24) . The ID3 tag includes the attribute information of the audio data which is being decoded as described above, and the analysis unit 160 extracts the attribute information. The extracted attribute information is displayed, for example, on the display unit during the sound reproduction (Step S26) . Accordingly, a user can recognize a music title of the reproduced sound (music).

In the embodiment, when the audio file is received from the server 10 in the streaming manner, the meta data related to the audio data is not received from the server 10, but the present disclosure is not limited thereto. For example, the meta data may be received. In this case, it is not necessary to perform the analysis of the ID3 tag by the analysis unit 160. However, when the information analyzed and extracted by the analysis unit 160 is different from the information of the meta data, the information extracted by the analysis unit 160 is employed. The reason is because it is possible to extract the right information by the analysis of the ID3 tag even when the meta data provided from the server 10 is different from the original information.

### (3-2. Sound Reproducing Process of MP4 Format Movie File)

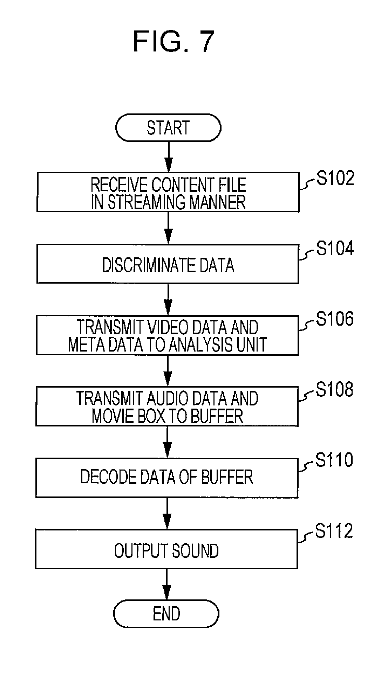

Fig. 7 is a flowchart illustrating a sound reproducing process of the MP4 format movie file.

The sound reproducing process shown in Fig. 7 is started in the same manner as that of Fig. 5, when the server 10 receives a notice of a transmission request of the content file to the reproduction device 30 and transmits the content file (MP4 format audio file) to the reproduction device 30.

First, the communication unit 46 receives the content file transmitted from the server 10 through the network 20, in the streaming manner (Step S102). The data discriminating unit 120 discriminates that the content file received in the streaming manner by the communication unit is a movie file (Step S104). The data discriminating unit 120 discriminates audio data, video data, Movie Box, and meta data.

After the discrimination, the data discriminating unit 120 transmits the video data and the meta data to the analysis unit 160 (Step S106). On the other hand, the data discriminating unit 120 transmits the audio data and the Movie Box to the buffer 130 through the data managing unit 140 (Step S108) . That is, in the movie file, only the audio data and the Movie Box necessary for sound reproduction is transmitted to the buffer 130.

When a predetermined amount of audio data is buffered in the buffer 130, the decoding unit 150 accesses the buffer 130 through the data managing unit 140, and decodes the audio data (Step S110) . Specifically, the decoding unit 150 accesses the address managed by the data managing unit 140, and the audio data is transmitted to the decoding unit 140 and is decoded. Thereafter, the decoded audio data is reproduced as sound by the speaker 48 (Step S112).

The video data is not reproduced in the process. The video data is transmitted to the analysis unit 160 with the meta data, and is analyzed during the sound reproduction.

### <4. Effectiveness of Reproduction Device according to Embodiment>

As described above, the reproduction device 30 according to the embodiment discriminates the data included in the content file received in the streaming manner from the reproduction data and the non-reproduction data, and then buffers the reproduction data (audio data) in the buffer 130 (the non-reproduction data is not buffered in the buffer 130). Accordingly, it is possible to prevent the buffer 130 with a small volume from being burdened by the non-reproduction data, and it is possible to sufficiently buffer the reproduction data in the buffer 130. As a result, the decoding of the buffered reproduction data is appropriately performed, and thus it is possible to realize the stable streaming reproduction.

More details will be described. When the MP3 format audio file is received in the streaming manner, it is possible to prevent the ID3 tag, which is not reproduced, from burdening the buffer 130 by buffering only the audio data excluding the ID3 tag in the buffer 130. Particularly, when the data amount of the ID3 tag is large (e.g., the ID3 tag includes picture data), it is possible to solve the problem that the audio data subsequent to the ID3 tag is not sufficiently buffered and thus the sound is not reproduced.

When the MP4 format movie file is received in the streaming manner, it is possible to prevent the video data and the meta data, which are not reproduced, from burdening the buffer 130 by storing only the audio data and the Movie Box in the buffer 130. As a result, even when the volume of the buffer 130 is small, the regular amount of audio data necessary for reproduction is buffered, and thus it is possible to realize the stable sound reproduction.

The decoding unit 150 according to the embodiment decodes the audio data buffered in the buffer 130, similarly to the case of decoding the encoded file stored in the memory 44. That is, it is not necessary to provide a decoding unit for the content file reproduced in the streaming manner, and a general wide-use decoder may be used as the decoding unit 150, and thus it is possible to contribute to the simplification of the configuration of the reproduction device 30.

### <5. Other Embodiments>

The preferred embodiment of the present disclosure has been described in detail with reference to the accompanying drawings, but the present disclosure is not limited to the examples. It should be understood by those skilled in the art that various modifications, combinations, subcombinations and alterations may occur depending on design requirements and other factors insofar as they are within the scope of the appended claims or the equivalents thereof.

In the embodiment, the mini-component having the internet radio function has been described as the example of the reproduction device, but the present disclosure is not limited thereto. For example, the present disclosure can be applied to an electronic apparatus (mobile phone, PDA, PC, etc.) which is capable of accessing the network and has a function of outputting sound or the like.

In the embodiment, the buffering of the audio data in the buffer in the case of the sound reproduction has been described, but the present disclosure is not limited thereto. For example, in a case of a reproduction device which does not reproduce sound but reproduces video, the present disclosure can be applied to a case where the sound data in the movie file is not buffered in the buffer 130 and the video data is buffered.

The present disclosure contains subject matter related to that disclosed in Japanese Priority Patent Application JP 2010-202196 filed in the Japan Patent Office on September 9, 2010, the entire contents of which are hereby incorporated by reference.

## Claims

1. A reproduction device comprising:
a reception unit that receives content data through a network in a streaming manner;
a discrimination unit that discriminates reproduction data to reproduce and non-reproduction data not to reproduce in the content data received in the streaming manner by the reception unit;
a data managing unit that stores the reproduction data in a buffer and does not store the non-reproduction data in the buffer, with respect to the reproduction data and the non-reproduction data discriminated by the discrimination unit; and
a decoding unit that decodes the reproduction data stored in the buffer by the data managing unit.

2. The reproduction device according to Claim 1,
wherein the data managing unit manages a first address of the reproduction data in the content data and a second address of the reproduction data stored in the buffer to be associated, and
wherein the decoding unit accesses the first address managed by the data managing unit and decodes the reproduction data.

3. The reproduction device according to Claim 1 or 2, further comprising an analysis unit that analyzes the non-reproduction data discriminated by the discrimination unit,
wherein the analysis unit analyzes the non-reproduction data during the decoding of the reproduction data performed by the decoding unit.

4. The reproduction device according to Claim 3,
wherein the non-reproduction data includes attribute information of the reproduction data, and
wherein the analysis unit analyzes the non-reproduction data and extracts the attribute information.

5. The reproduction device according to Claim 3,
wherein the content data includes audio data and video data mixed therein, and
wherein the data managing unit stores data obtained by picking out the video data from the content data, as the reproduction data in the buffer.

6. The reproduction device according to Claim 5,
wherein the data managing unit stores the audio data, and reference data included in the content data and referred to at the time of decoding the audio data, as the reproduction data in the buffer, and
wherein the decoding unit decodes the audio data on the basis of the reference data stored in the buffer.

7. A reproduction method comprising:
receiving content data through a network in a streaming manner;
discriminating reproduction data to reproduce and non-reproduction data not to reproduce in the content data received in the streaming manner;
storing the reproduction data in a buffer and not storing the non-reproduction data in the buffer, with respect to the reproduction data and the non-reproduction data which are discriminated; and
decoding the reproduction data stored in the buffer.

8. A program for causing a computer of a reproduction device to execute:
receiving content data through a network in a streaming manner;
discriminating reproduction data to reproduce and non-reproduction data not to reproduce in the content data received in the streaming manner;
storing the reproduction data in a buffer and not storing the non-reproduction data in the buffer, with respect to the reproduction data and the non-reproduction data which are discriminated; and
decoding the reproduction data stored in the buffer.
